# EUROPÄISCHE PATENTANMELDUNG

(11) **EP 4 290 367 A1**
(43) Veröffentlichungstag der Anmeldung: **13.12.2023**
(21) Anmeldenummer: 22177789.9
(22) Anmeldetag: 08.06.2022
(51) Int. Cl.: G06F 8/34, G06F 8/35

(54) **COMPUTERSYSTEM**

(71) Anmelder: Primetals Technologies Germany GmbH, 91058 Erlangen (DE)
(72) Erfinder: Müller, Andreas, 90579 Langenzenn (DE); Fischer, Robert, 4030 Linz (AT); Schallenberger, Jan, 91086 Aurachtal (DE); Schönherr, Martin, 91301 Forchheim (DE); Setter, Jens, 91056 Erlangen (DE); Timpl, Markus, 95500 Heinersreuth (DE)
(74) Vertreter: Metals@Linz

(57) **Zusammenfassung**

Ein Computersystem (11) umfasst eine grafische Benutzerschnittstelle (12), über die dem Computersystem (11) von einer Bedienperson (13) für Komponenten einer Gruppe von Komponenten einer Basisautomatisierung einer Anlage der Grundstoffindustrie eine grafische Beschreibung der technologischen Funktionalität vorgebbar ist. Es umfasst weiterhin einen Programmgenerator (15), mittels dessen die grafische Beschreibung der technologischen Funktionalität in ein einheitliches Computerprogramm (16) umsetzbar ist. Es umfasst weiterhin eine Testumgebung (17) über welche die technologische Funktionalität in einer virtuellen Anlage der Grundstoffindustrie testbar ist. Über eine Eingabeeinrichtung (18) kann dem Computersystem (11) von der Bedienperson (13) ein Auswahlbefehl (SEL) vorgegeben werden. Dadurch wird eine von mehreren Gruppen von Komponenten selektiert, die dem Computersystem (11) bekannt sind. Die Komponenten sind von Gruppe zu Gruppe funktional zwar gleichartig, programmtechnisch jedoch voneinander verschieden. Mittels eines entsprechenden Programmkonverters (19) wird für die Komponenten der selektierten Gruppe ein gruppenspezifisches Computerprogramm (20) generiert, das auf dem Computersystem (11) speicherbar und von dort portierbar ist.

## Beschreibung

### Gebiet der Technik

Die vorliegende Erfindung geht aus von einem Computersystem zum Erstellen eines Programms für eine Gruppe von Komponenten einer Basisautomatisierung einer Anlage der Grundstoffindustrie.

### Stand der Technik

Derartige Computersysteme sind allgemein bekannt.

Anlagen der Grundstoffindustrie sind allgemein bekannt. Es kann sich beispielsweise um einen Lichtbogenofen, einen Konverter, eine Stranggießanlage, ein Walzwerk und ähnliche mehr handeln. Derartige Anlagen werden von einer Basisautomatisierung gesteuert. Die Basisautomatisierung - oftmals auch als L1-System bezeichnet - implementiert die technologischen, in Echtzeit arbeitenden Regelkreise der Anlage der Grundstoffindustrie.

Die Basisautomatisierung umfasst viele einzelne Komponenten, die jeweils eine technologische Funktionalität implementieren. Die jeweilige technologische Funktionalität wird durch einen von der jeweiligen Komponente ausführbaren Programmcode festgelegt, mit dem die jeweilige Komponente programmiert wird.

Das Erstellen des ausführbaren Programmcodes erfolgt üblicherweise mittels eines Computersystems, das eine grafische Benutzerschnittstelle umfasst, über die dem Computersystem von einem Benutzer für die Komponente eine entsprechende grafische Beschreibung der technologischen Funktionalität vorgebbar ist. Das Computersystem umfasst einen Programmgenerator, mittels dessen die grafische Beschreibung der technologischen Funktionalität in ein Computerprogramm umsetzbar ist, das auf dem Computersystem speicherbar ist. Das Computersystem umfasst weiterhin eine Testumgebung, über welche die technologische Funktionalität in einer virtuellen Anlage der Grundstoffindustrie testbar ist.

Die Komponenten der Basisautomatisierung werden oftmals von verschiedenen Herstellern angeboten, beispielsweise der Siemens AG, Allen Bradley/Rockwell, Mitsubishi Electric/Melsec und anderen. Innerhalb derselben Anlage der Grundstoffindustrie sind zwar oftmals nur Komponenten desselben Herstellers installiert. Von Anlage zu Anlage können der Hersteller und damit die für die Implementierung gleichartiger Aufgaben (beispielsweise einer Zugregelung) konkret verwendeten Komponenten jedoch durchaus variieren. Das Computersystem ist in der Regel ebenfalls spezifisch für einen bestimmten Hersteller. Es wird von dem jeweiligen Hersteller oftmals als spezielle Programmierumgebung angeboten, die für die Programmierung der Komponenten der Basisautomatisierung des entsprechenden Herstellers verwendet werden kann, aber nicht für die Programmierung von Komponenten der Basisautomatisierung anderer Hersteller. Mit einem bestimmten Computersystem kann also zwar der Programmcode für die Komponenten dieses Herstellers generiert werden, nicht aber der Programmcode für die prinzipiell gleichwertigen Komponenten eines anderen Herstellers.

Das Erstellen des Programmcodes erfolgt in der Regel durch Experten eines Systemanbieters, welche die Programmierung für die gesamte jeweilige Anlage erstellen. Der Systemanbieter - beispielsweise die Anmelderin und ihre Wettbewerber - muss daher, um eine bestimmte technologische Lösung auf verschiedenen Anlagen implementieren zu können, für jede Anlage das Computersystem desjenigen Herstellers der Komponenten des Basisautomatisierungssystems vorhalten, mit dem die Anlage ausgestattet ist, und auch die entsprechenden Computerprogramme und die entsprechenden Programmcodes erstellen. Weiterhin muss, wenn eine technologische Funktionalität von einer Anlage auf eine andere Anlage transferiert werden soll, der Programmcode für die andere Anlage neu geschrieben werden. Auch bei einer Programmpflege und Updates müssen die Programme für die Komponenten aller Hersteller eigenständig modifiziert werden. Dies ist mühsam und fehlerträchtig.

### Zusammenfassung der Erfindung

Die Aufgabe der vorliegenden Erfindung besteht darin, Möglichkeiten zu schaffen, mittels derer die Nachteile des Standes der Technik vermieden werden.

Die Aufgabe wird durch ein Computersystem mit den Merkmalen des Anspruchs 1 gelöst. Eine vorteilhafte Ausgestaltung des Computersystems ist Gegenstand des abhängigen Anspruchs 2.

Konkret wird die Aufgabe durch ein Computersystem zum Erstellen eines Programms für eine Gruppe von Komponenten einer Basisautomatisierung einer Anlage der Grundstoffindustrie gelöst, wobei dem Computersystem mehrere Gruppen von Komponenten bekannt sind,
- wobei das Computersystem eine grafische Benutzerschnittstelle umfasst, über die dem Computersystem von einer Bedienperson für die Komponenten der Gruppe eine grafische Beschreibung der technologischen Funktionalität vorgebbar ist,
- wobei das Computersystem einen Programmgenerator umfasst, mittels dessen die grafische Beschreibung der technologischen Funktionalität in ein einheitliches Computerprogramm umsetzbar ist,
- wobei das Computersystem eine Testumgebung umfasst, über welche die technologische Funktionalität in einer virtuellen Anlage der Grundstoffindustrie testbar ist,
- wobei das Computersystem eine Eingabeeinrichtung umfasst, über die dem Computersystem von der Bedienperson ein Auswahlbefehl zum Selektieren einer der Gruppen vorgebbar ist,
- wobei das Computersystem mehrere Programmkonverter umfasst, mittels derer die grafische Beschreibung der technologischen Funktionalität in ein gruppenspezifisches Computerprogramm umsetzbar ist, das auf dem Computersystem speicherbar und von dort portierbar ist und anhand dessen für die Komponenten der selektierten Gruppe der entsprechende, von den Komponenten der selektierten Gruppe ausführbare Programmcode generierbar ist.

Durch die erfindungsgemäße Vorgehensweise kann also das gruppenspezifische Computerprogramm erstellt werden, so dass sodann nur noch mittels des herstellerspezifischen Computersystems der von den Komponenten der jeweiligen Gruppe ausführbare Programmcode generiert werden muss.

In jedem Fall steht durch die einheitliche grafische Beschreibung der technologischen Funktionalität eine einheitliche, plattformübergreifende technologische Lösung zur Verfügung, die als solche einheitlich gewartet, gepflegt usw. werden kann.

Vorzugsweise umfasst das Computersystem mehrere weitere Programmkonverter, mittels derer ein gruppenspezifisches Computerprogramm in eine einheitliche grafische Beschreibung der technologischen Funktionalität umsetzbar ist.

Dadurch kann eine existierende technologische Lösung in eine einheitliche grafische Beschreibung der technologischen Funktionalität umgesetzt werden, so dass auf einfache Weise eine Basis für die spätere, plattformübergreifende Programmierung geschaffen werden kann.

### Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: beispielhaft einen Teil einer Anlage einer Grundstoffindustrie und deren Reglerstruktur und
- FIG 2: ein Computersystem.

### Beschreibung der Ausführungsformen

Auch wenn die Anlage der Grundstoffindustrie als solche nicht Gegenstand der vorliegenden Erfindung ist, wird zur besseren Erläuterung der vorliegenden Erfindung zunächst beispielhaft ein Teil einer derartigen Anlage erläutert.

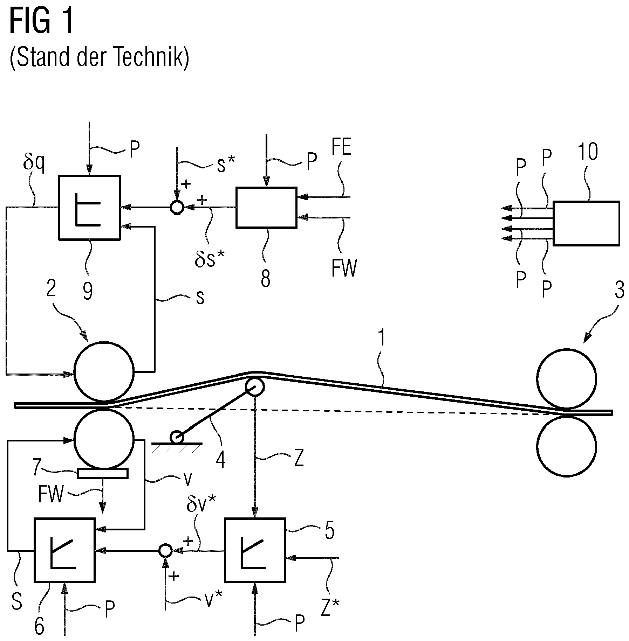

Gemäß FIG 1 weist eine Anlage der Grundstoffindustrie beispielsweise mehrere Walzgerüste auf, die von einem flachen Walzgut 1 aus Metall sequenziell nacheinander durchlaufen werden. Dargestellt sind in FIG 1 nur zwei der Walzgerüste, die nachfolgend als vorderes Walzgerüst 2 und hinteres Walzgerüst 3 bezeichnet werden. Zwischen den Walzgerüsten 2, 3 ist ein Schlingenheber 4 angeordnet, der an das Walzgut 1 angestellt ist und es in gewissem Umfang aus der Passline - d.h. der direkten Verbindung der Walzspalte der Walzgerüste 2, 3 miteinander - auslenkt. Die Passline ist in FIG 1 gestrichelt dargestellt.

Mittels des Schlingenhebers 4 wird ein Messwert erfasst, anhand dessen durch entsprechende Umrechnung ein Zugistwert Z ermittelt werden kann. Der Zugistwert Z und ein korrespondierender Sollwert Z* werden einem Zugregler 5 zugeführt, der gemäß einer Reglercharakteristik (beispielsweise einer PI-Reglercharakteristik) einen Geschwindigkeitszusatzsollwert δv* ermittelt, der auf einen anderweitig vorgegebenen Geschwindigkeitssollwert v* aufgeschaltet wird. Der dadurch ermittelte resultierende Geschwindigkeitssollwert und ein Geschwindigkeitsistwert v werden einem Geschwindigkeitsregler 6 zugeführt. Der Geschwindigkeitsregler 6 ermittelt gemäß einer Reglercharakteristik (beispielsweise ebenfalls einer PI-Reglercharakteristik) eine Stellgröße S für Antriebe der Walzen des vorderen Walzgerüsts 2. Die Antriebe der Walzen sind in FIG 1 nicht mit dargestellt.

Mittels einer geeigneten Messeinrichtung 7 (beispielsweise einer Druckmessdose) wird ein Messwert für die Walzkraft FW des vorderen Walzgerüsts 2 erfasst. Die Walzkraft FW und eine erwartete Walzkraft FE werden einer AGC 8 (automatic gauge control) zugeführt, die unter Verwertung der beiden Walzkräfte FW, FE (und weiterer Größen) einen Zusatzsollwert δs* für die Anstellung des vorderen Walzgerüsts 2 ermittelt. Der Zusatzsollwert δs* wird auf einen anderweitig vorgegebenen Anstellungssollwert s* aufgeschaltet. Der dadurch ermittelte resultierende Anstellungssollwert und ein Anstellungsistwert s werden einem Walzspaltregler 9 zugeführt. Der Walzspaltregler 9 ermittelt gemäß einer Reglercharakteristik (beispielsweise einer P-Reglercharakteristik) eine Stellgröße δq für eine Anstelleinrichtung zum Einstellen des Walzspaltes des vorderen Walzgerüsts 2. Die Anstelleinrichtung ist in FIG 1 nicht mit dargestellt.

Die genannten Regler 5, 6 und 9 und auch die AGC 8 sind Komponenten K einer Basisautomatisierung. Die Basisautomatisierung umfasst in der Regel noch viele weitere Komponenten K. Die Komponenten K könnten auch andersartig ausgebildet sein, beispielsweise Reglereinrichtungen einer Kühlstrecke oder einer Stranggießanlage oder eines Konverters oder einer anderen Anlage sein.

Genau genommen ist der jeweiligen Komponente nicht bekannt, welche technologische Größe ihr genau zugeführt wird. Es handelt sich vielmehr um einen Software-Baustein, dem im Rahmen des Engineering einmalig eine datentechnische Parametrierung P vorgegeben wird. Die datentechnische Parametrierung P legt fest, welche Datenwerte der Komponente im Betrieb immer wieder neu vorgegeben werden und welche Datenwerte von der Komponente im Betrieb auf welche Weise immer wieder neu ermittelt und ausgegeben werden. Die Datenwerte, die der jeweiligen Komponente vorgegeben werden, sind beispielsweise der jeweilige Sollwert und der jeweilige Istwert. Daraus ermittelt die Komponente gemäß ihrer Parametrierung P einen auszugebenden Datenwert, beispielsweise die entsprechende Stellgröße oder den entsprechenden Zusatzsollwert. Aus Sicht der jeweiligen Komponente aber gibt sie lediglich einen Datenwert aus. Wie die der Komponente zugeführten Datenwerte tatsächlich zustande gekommen sind und wie die von der Komponente ausgegebenen Datenwerte tatsächlich verarbeitet werden, ist der Komponente nicht bekannt. Allgemein ausgedrückt: Einer bestimmten Komponente wird eine Parametrierung P vorgegeben. Durch die Parametrierung P wird für die jeweilige Komponente festgelegt, welche Datenwerte ihr als Eingangsgrößen zugeführt werden und auf welche Art und Weise sie aus den Eingangsgrößen diejenigen Datenwerte ermitteln soll, die von ihr als Ausgangsgrößen ausgegeben werden. In diesem allgemeinen Sinne ist daher auch die AGC 8 ein "Regler", da sie mehrere Eingangsgrößen erhält und anhand der Abweichung der einen Eingangsgröße von der anderen Eingangsgröße eine Ausgangsgröße ermittelt.

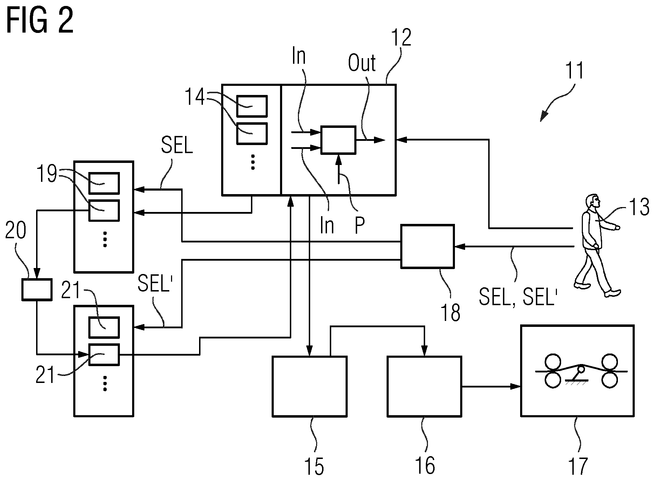

Zum Erstellen eines von den Komponenten K ausführbaren Programms 10, das die Parametrierungen P für mehrere derartige Komponenten - also eine Gruppe von Komponenten - umfasst, umfasst ein Computersystem 11 gemäß FIG 2 eine grafische Benutzerschnittstelle 12. Über die grafische Benutzerschnittstelle 12 kann eine Bedienperson 13 für verschiedene Komponenten - beispielsweise die Regler 5, 6 und 9 - eine grafische Beschreibung der jeweiligen technologischen Funktionalität vorgeben. Beispielsweise kann die grafische Benutzerschnittstelle 12 der Bedienperson 13 Basisobjekte 14 anbieten, die von der Bedienperson 13 selektiert und instanziiert werden können. Eine bestimmte Instanz eines Basisobjekts 14 entspricht dann einer der Komponenten, beispielsweise dem Zugregler 5 oder dem Geschwindigkeitsregler 6. Für die entsprechende Instanz werden dann von der Bedienperson 13 die Parametrierung P, die Eingangsgrößen In und die Ausgangsgrößen Out vorgegeben und damit festgelegt. Die Parametrierung P kann auch Zeitlimitierungen wie beispielsweise eine Zykluszeit mit umfassen. Die Zeitlimitierungen können nach Bedarf einzeln für die jeweilige Instanz oder für Gruppen von Instanzen oder für die Instanzen einheitlich vorgegeben werden. Der grafischen Beschreibung können weiterhin auch Projektinformationen wie beispielsweise eine Topologie zugeordnet sein. Die entsprechende Vorgehensweise ist Fachleuten allgemein bekannt. Eine einmal erstellte grafische Beschreibung einer technologischen Funktionalität kann, wie allgemein üblich, auf dem Computersystem 11 gespeichert werden, später wieder aufgerufen werden und nach dem erneuten Aufrufen modifiziert werden.

Das Computersystem 11 umfasst weiterhin einen Programmgenerator 15. Der Programmgenerator 15 ist in der Lage, die vorgegebene grafische Beschreibung der technologischen Funktionalität in ein Computerprogramm 16 umzusetzen. Das Computerprogramm 16 umfasst die Parametrierungen P für die mittels der grafischen Benutzerschnittstelle 12 instanziierten Basisobjekte 14 (= die Komponenten der Gruppe). Das Computerprogramm 16 wird auf dem Computersystem 11 gespeichert, beispielsweise auf dessen Festplatte. Das Computerprogramm 16 stimmt insoweit mit dem Computerprogramm 10 überein, als es ebenso wie das Computerprogramm 10 die Parametrierungen P für eine Gruppe von Komponenten umfasst und in einer prinzipiell ablauffähigen Form ist. Es ist jedoch insoweit von dem Computerprogramm 10 unabhängig, als es ohne Rücksicht darauf erstellt ist, ob es von den Komponenten einer bestimmten Gruppe von Komponenten ausführbar ist, also sozusagen in deren Sprache abgefasst ist.

Das Computersystem 11 umfasst weiterhin eine Testumgebung 17. Die Testumgebung 17 kann beispielsweise ein Modell der Anlage der Grundstoffindustrie umfassen. Über die Testumgebung 17 kann die technologische Funktionalität in einer virtuellen Anlage der Grundstoffindustrie getestet werden. Der Test wird in der Regel unter Verwendung des Computerprogramms 16 durchgeführt.

Die Bedienperson 13 kann im Computersystem 11 über eine Eingabeeinrichtung 18 (beispielsweise eine übliche Kombination von Tastatur und Maus) einen Auswahlbefehl SEL vorgeben. Mittels des Auswahlbefehls SEL wird derjenige von mehreren Programmkonvertern 19 des Computersystems 11 ausgewählt, der durch den Auswahlbefehl SEL bestimmt ist. Der ausgewählte Codegenerator 19 setzt die grafische Beschreibung der technologischen Funktionalität in ein gruppenspezifisches Computerprogramm 20 um. Das gruppenspezifische Computerprogramm 20 kann auf dem Computersystem 11 gespeichert und sodann von dort transferiert (portiert) werden. Das gruppenspezifische Computerprogramm 20 korrespondiert inhaltlich mit der grafischen Beschreibung der technologischen Funktionalität, wie sie über die Benutzerschnittstelle 12 vorgegeben wurde (gegebenenfalls einschließlich ergänzender Informationen für das gruppenspezifische Computerprogramm 20 wie beispielsweise Zykluszeiten und Projektinformationen). Das gruppenspezifische Computerprogramm 20 ist jedoch in einer Form, die von einem gruppenspezifischen (im Ergebnis also herstellerspezifischen) Computersystem des Standes der Technik verarbeitbar ist. Beispielsweise kann das gruppenspezifische Computerprogramm 20 die korrespondierende grafische Beschreibung der technologischen Funktionalität für das gruppenspezifische Computersystem des Standes der Technik sein. Das Computerprogramm 20 ist (zumindest in der Regel) von den Komponenten der jeweiligen Gruppe nicht unmittelbar ausführbar. Mittels des Computersystems 20 kann jedoch der gruppenspezifische ausführbare Programmcode 10 generiert werden.

Vorzugsweise umfasst das Computersystem 11 zusätzlich mehrere weitere Programmkonverter 21. Die Programmkonverter 21 sind funktional invers zu den Programmkonvertern 19. Durch einen weiteren Auswahlbefehl SEL', der ebenfalls von der Bedienperson 13 vorgegeben werden kann, kann einer der weiteren Programmkonverter 21 selektiert werden. Der selektierte weitere Programmkonverter 21 kann in diesem Fall dazu verwendet werden, ein gruppenspezifisches Computerprogramm 20 in eine einheitliche grafische Beschreibung der technologischen Funktionalität umzusetzen.

Die vorliegende Erfindung weist viele Vorteile auf. Insbesondere kann ein Computersystem 11 geschaffen werden, mittels dessen auf einfache Weise ein herstellerübergreifendes Erstellen von grafischen Beschreibungen für technologische Funktionalitäten für Gruppen von Komponenten der Basisautomatisierung einer Anlage der Grundstoffindustrie möglich ist. Dies verbessert die Effizienz und die Sicherstellung der Qualität. Die Anzahl an unterstützten Gruppen von Komponenten (im Ergebnis also die Anzahl an Programmkonvertern 19 sowie weiteren Programmkonvertern 21) ist prinzipiell beliebig erweiterbar. Es muss bei einer Weiterentwicklung nur noch das gemeinsame Computerprogramm 16 getestet werden. Das Computersystem 11 kann auf einem offenen, etablierten Standard aufbauen, beispielsweise der IEC 61499. Falls sich im realen Betrieb weitere Änderungen ergeben, die an einem Computerprogramm 20 durchgeführt werden, können diese auf einfache Weise übernommen werden. Weiterhin ergeben sich Kostenvorteile.

Obwohl die Erfindung im Detail durch das bevorzugte Ausführungsbeispiel näher illustriert und beschrieben wurde, so ist die Erfindung nicht durch die offenbarten Beispiele eingeschränkt und andere Varianten können vom Fachmann hieraus abgeleitet werden, ohne den Schutzumfang der Erfindung zu verlassen.

### Bezugszeichenliste

- 1: Walzgut
- 2, 3: Walzgerüste
- 4: Schlingenheber
- 5: Zugregler
- 6: Geschwindigkeitsregler
- 7: Messeinrichtung
- 8: AGC
- 9: Walzspaltregler
- 10: Programm
- 11: Computersystem
- 12: Benutzerschnittstelle
- 13: Bedienperson
- 14: Basisobjekte
- 15: Programmgenerator
- 16, 20: Computerprogramme
- 17: Testumgebung
- 18: Eingabeeinrichtung
- 19, 21: Programmkonverter
- FW, FE: Walzkräfte
- In: Eingangsgrößen
- Out: Ausgangsgrößen
- P: Parametrierung
- PC: Programmcodes
- s, s*: Anstellungswerte
- S, δq: Stellgrößen
- SEL, SEL': Auswahlbefehle
- v, v*: Geschwindigkeitswerte
- Z, Z*: Zugwerte

- δs*, δv*: Zusatzsollwerte

## Patentansprüche

1. Computersystem zum Erstellen eines Programms (10) für eine Gruppe von Komponenten einer Basisautomatisierung einer Anlage der Grundstoffindustrie, wobei dem Computersystem mehrere Gruppen von Komponenten bekannt sind und die Komponenten von Gruppe zu Gruppe zwar funktional gleichartig, programmtechnisch jedoch voneinander verschieden sind,
- wobei das Computersystem eine grafische Benutzerschnittstelle (12) umfasst, über die dem Computersystem von einer Bedienperson (13) für die Komponenten der Gruppe eine grafische Beschreibung der technologischen Funktionalität vorgebbar ist,
- wobei das Computersystem einen Programmgenerator (15) umfasst, mittels dessen die grafische Beschreibung der technologischen Funktionalität in ein einheitliches Computerprogramm (16) umsetzbar ist,
- wobei das Computersystem eine Testumgebung (17) umfasst, über welche die technologische Funktionalität in einer virtuellen Anlage der Grundstoffindustrie testbar ist,
- wobei das Computersystem eine Eingabeeinrichtung (18) umfasst, über die dem Computersystem von der Bedienperson (13) ein Auswahlbefehl (SEL) zum Selektieren einer der Gruppen vorgebbar ist,
- wobei das Computersystem mehrere Programmkonverter (19) umfasst, mittels derer die grafische Beschreibung der technologischen Funktionalität in ein gruppenspezifisches Computerprogramm (20) umsetzbar ist, das auf dem Computersystem speicherbar und von dort portierbar ist und anhand dessen für die Komponenten der selektierten Gruppe der entsprechende, von den Komponenten der selektierten Gruppe ausführbare Programmcode generierbar ist.

2. Computersystem nach Anspruch 1,
**dadurch gekennzeichnet,**
**dass** das Computersystem mehrere weitere Programmkonverter (21) umfasst, mittels derer das gruppenspezifische Computerprogramm (20) in eine einheitliche grafische Beschreibung der technologischen Funktionalität umsetzbar ist.
